**Europäisches Patentamt**

(19) **European Patent Office**

**Office européen des brevets**

(11) Numéro de publication: **0 125 946 B1**

(12) **FASCICULE DE BREVET EUROPEEN**

(45) Date de publication du fascicule du brevet:
**16.08.89**

(21) Numéro de dépôt: **84400701.3**

(22) Date de dépôt: **10.04.84**

(51) Int. Cl.⁴: **A 01 K 1/03**

(54) **Ensemble de cages pour animaux.**

(30) Priorité: **14.04.83 FR 8306139**

(43) Date de publication de la demande:
**21.11.84 Bulletin 84/47**

(45) Mention de la délivrance du brevet:
**16.08.89 Bulletin 89/33**

(84) Etats contractants désignés:
**AT BE CH DE GB IT LI LU NL SE**

(56) Documents cités:
**FR-A- 2 087 998**
**US-A- 3 902 459**
**US-A- 4 085 705**

(73) Titulaire: **Gillet, Roger, Route de la Noue Rousseau,
F-91240 Saint Michel sur Orge (FR)**

(72) Inventeur: **Gillet, Roger, Route de la Noue Rousseau,
F-91240 Saint Michel sur Orge (FR)**

(74) Mandataire: **Cabinet Pierre HERRBURGER,
115, Boulevard Haussmann, F-75008 Paris (FR)**

Il est rappelé que: Dans un délai de neuf mois à compter de la date de publication de la mention de la délivrance du brevet européen toute personne peut faire opposition au brevet européen délivré. auprès de l'Office européen des brevets. L'opposition doit
être formée par écrit et motivée. Elle n'est réputée formée qu'après paiement de la taxe d'opposition (Art. 99(1) Convention sur le
brevet européen).

ACTORUM AG

## Description

L'invention concerne un ensemble de cages pour animaux, notamment pour cuniculiculture.

On connaît déjà des ensembles de cages pour cuniculiculture qui se présentent sous la forme de deux rangées horizontales de cages opposées et dans chacune desquelles est disposé un lapin.

Chacune de ces cages doit comporter, d'une part une boîte de nidification, d'autre part une mangeoire. Cependant, afin d'augmenter le rendement des élevages, c'est-à-dire d'augmenter le nombre de cages, tout en leur conservant un volume suffisant, on est amené à placer la boîte à nid et/ou la mangeoire à l'extérieur de la cage, des orifices étant dans ce cas prévus dans la paroi latérale de la cage pour permettre à l'animal de pénétrer dans la boîte à nid et d'accéder à la nourriture de la mangeoire.

Cependant, le coût de fabrication de ces installations est relativement onéreux.

Egalement, ces installations connues nécessitent un temps important pour apporter les soins nécessaires aux lapins de l'élevage notamment du fait que la nourriture doit être déposée dans chaque mangeoire de chaque cage, ce qui rend difficile la réalisation d'une installation automatique de déversement de nourriture dans ces mangeoires.

En outre, la nourriture des lapins s'oxyde très rapidement à l'air et à la lumière si bien qu'il convient de déverser, dans chaque mangeoire, une quantité faible de nourriture mais de répéter fréquemment cette opération de déversement.

Une telle mangeoire se disposant à l'intérieur d'une cage pour petits animaux est, par exemple, décrite dans le brevet américain N° 3 902 459.

On connaît également, suivant le brevet français N° 2 087 998, une installation pour l'élevage industriel des lapins, qui comprend des groupes de quatre cages adjacentes contenant chacune un récipient, ces récipients étant alimentés par la nourriture tombant d'un conduit commun disposé le long des arêtes adjacentes des quatre cages. Cette disposition permet de réduire le temps nécessaire à l'approvisionnement en nourriture des récipients. Il est également prévu, suivant ce brevet, de disposer les groupes de quatre cages verticalement au-dessus les uns des autres, de façon que le conduit commun recevant la nourriture alimente les récipients des quatre cages des groupes disposés à des niveaux différents.

Vis-à-vis de ces dispositifs connus, la présente invention concerne un ensemble de cages pour animaux comprenant des groupes de quatre cages, adjacentes, de forme parallélépipédique, chaque groupe de quatre cages contenant un récipient pour des aliments provenant d'un conduit commun disposé dans la zone d'intersection de ces quatre cages, ensemble caractérisé en ce que la partie inférieure du conduit commun est constituée par une trémie dont l'extrémité inférieure de section rétrécie débouche dans le récipient pour les aliments provenant de la trémie, la section horizontale de ce récipient étant identique à la plus grande section horizontale de la trémie et en ce que chaque cage présente, dans la zone d'intersection, une arête latérale constituée par un pan coupé d'angle s'adaptant contre l'une des faces de la trémie, chaque pan coupé d'angle des cages présentant une ouverture latérale permettant aux animaux contenus dans les quatre cages d'accéder à la nourriture de ce récipient.

Suivant une autre caractéristique de l'invention, les cages sont mobiles par coulissement sur des profilés disposés transversalement aux rangées de l'ensemble.

L'invention est représentée à titre d'exemple non limitatif sur les dessins ci-joints, dans lesquels:

– la figure 1 est une vue en perspective schématique d'un ensemble de cages conforme à l'invention,

– la figure 2 est une coupe suivant A–A de la figure 1,

– la figure 3 est une vue de dessus d'une trémie,

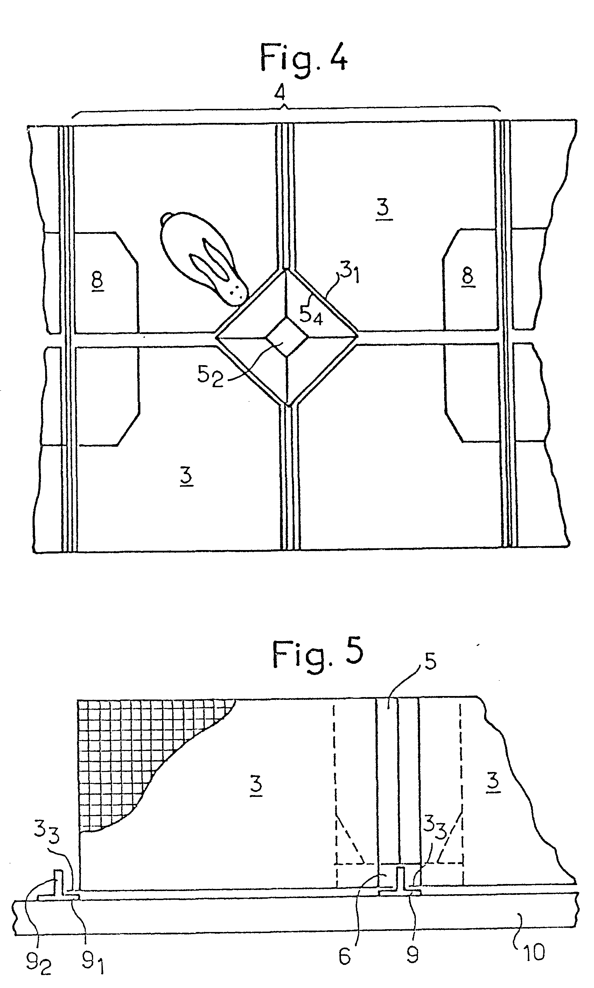

– la figure 4 est une vue de dessus partielle à échelle agrandie d'un ensemble conforme à l'invention,

– la figure 5 est une vue de dessous de la figure 4.

La présente invention a en conséquence pour but la réalisation d'un ensemble de cages pour animaux et notamment pour cuniculiculture qui soit d'un coût de fabrication plus faible, qui permette d'augmenter le rendement, c'est-à-dire le nombre de cages par unité de surface et qui réduise également les frais entraînés par les soins nécessaires des animaux tout en réduisant le nombre de points d'alimentation en nourriture et en permettant ainsi la mise en œuvre d'installations automatiques d'alimentation.

Cet ensemble de cages se compose de deux rangées 1, 2 de cages 3 en grillage ou treillis métallique, ces cages étant opposées deux à deux.

Les cages 3 de ces rangées se divisent en groupes de quatre cages 4 pour lesquels il est prévu un seul point d'alimentation constitué par une trémie 5 disposée à l'intersection commune de ces quatre cages.

Chaque trémie 5 affleure par son extrémité ouverte supérieure $5_1$ avec la face supérieure des cages 3 et l'extrémité inférieure $5_2$ de section rétrécie et pourvue d'une goulotte est disposée au-dessus d'un récipient 6 dans lequel s'écoule progressivement la nourriture de la trémie 5 au fur et à mesure de sa consommation par les animaux.

Dans l'exemple représenté, la trémie et son récipient sont de section horizontale carrée et la trémie est supportée par son récipient à l'aide de montants 7 reliant les angles de la trémie à ceux du récipient.

Chaque ensemble, trémie et récipient, est placé dans la zone d'intersection des quatre cages du groupe 4 de façon que chacune de ses faces latérales $5_1$ soit disposée en oblique dans l'angle de chacune des cages 3 réalisée en forme générale de parallélépipède rectangle.

A cet effet, chaque cage 3 présente une arête latérale constituée par un pan coupé $3_1$ venant se placer contre la face latérale $5_4$ de la trémie et de son récipient, ce pan coupé $3_1$ de chaque cage 3 étant pourvu d'une ouverture $3_2$ permettant à l'animal de chaque cage d'accéder à la nourriture du récipient 6.

Des cloisons $5_3$ sont prévues à hauteur des angles de l'ensemble entre les ouvertures $3_2$ afin d'éviter notamment que les lapereaux puissent passer d'une cage à l'autre.

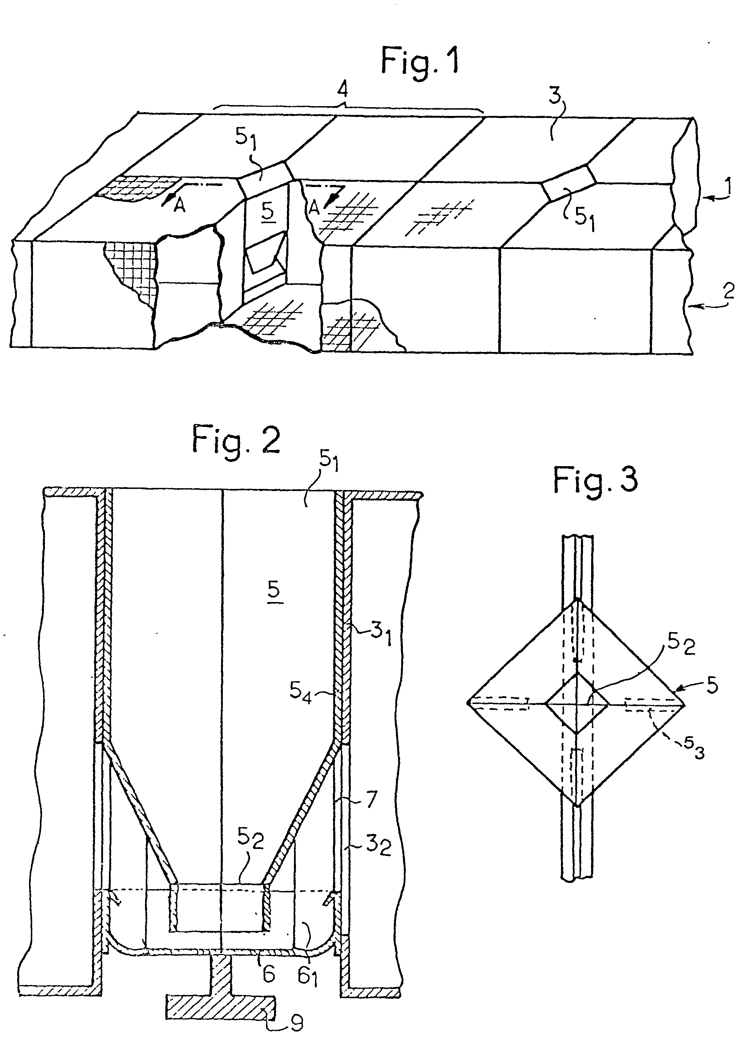

Dans l'exemple représenté, voir figure 2, le récipient 6 est ainsi divisé en quatre alvéoles $6_1$ afin que chacune d'entre elles puisse recevoir la nourriture provenant de la trémie 5 et destinée à l'animal disposé dans la cage en regard.

On constate que, du fait de la construction de cet ensemble de cages, il n'existe plus qu'un seul point d'alimentation pour quatre cages, les trémies pouvant aisément être rechargées en aliments par une installation automatique étant donné que leur nombre est réduit et qu'elles sont disposées en alignement entre les deux rangées 1 et 2.

Egalement, du fait de cette disposition, le volume occupé par cette mangeoire est réduit, il ne constitue pas une partie dépassante à l'extérieur du périmètre des rangées de cages de façon à pouvoir augmenter le volume des cages et à permettre la mise en place d'une boîte de nidification 8 à l'intérieur de ces cages.

Ces cages 3, qui possèdent une porte soit sur la face supérieure, soit sur la face latérale extérieure aux rangées, sont disposées coulissantes vers l'extérieur, transversalement à chaque rangée, et à cet effet ces cages sont supportées par des profilés en T renversé 9 disposés transversalement aux rangées 1 et 2 de cages, chaque cage étant pourvue à sa base de rebords latéraux extérieurs $3_3$ qui viennent s'appuyer sur les ailes $9_1$ des profilés 9, tandis que la branche verticale $9_2$ de ce profilé constitue le moyen de guidage lors du coulissement des cages.

Ces profilés 9 sont eux-mêmes fixés sur une structure longitudinale 10.

Les profilés 9, qui sont disposés dans la zone médiane de chaque groupe 4 de quatre cages, passent sous la zone centrale des récipients 6 et constituent leur moyen de support, ainsi que le moyen de support des trémies 5 (voir figure 2).

## Revendications

1. Ensemble de cages pour animaux comprenant des groupes de quatre cages, adjacentes, de forme parallélépipédique, chaque groupe de quatre cages contenant un récipient (6) pour des aliments provenant d'un conduit commun disposé dans la zone d'intersection de ces quatre cages, ensemble caractérisé en ce que la partie inférieure du conduit commun est constituée par une trémie (5) dont l'extrémité inférieure de section rétrécie débouche dans le récipient (6) pour les aliments provenant de la trémie, la section horizontale de ce récipient étant identique à la plus grande section horizontale de la trémie (5) et en ce que chaque cage (3) présente, dans la zone d'intersection, une arête latérale constituée par un pan coupé d'angle ($3_1$) s'adaptant contre l'une des faces de la trémie, chaque pan coupé d'angle ($3_1$) des cages présentant une ouverture latérale ($3_2$) permettant aux animaux contenus dans les quatre cages d'accéder à la nourriture de ce récipient (6).

2. Ensemble conforme à la revendication 1, caractérisé en ce que les cages se présentent sous la forme de deux rangées horizontales (1, 2) de cages (3) adjacentes, subdivisées en groupes de quatre cages, composés chacun de deux cages adjacentes d'une rangée et de deux cages adjacentes de l'autre rangée, la trémie (5) de chaque groupe de quatre cages débouchant par son extrémité supérieure au niveau de la face supérieure des rangées de cages.

3. Ensemble conforme à l'une quelconque des revendications précédentes, caractérisé en ce que la trémie est supportée par le récipient par des montants (7) reliant les angles de la trémie à ceux du récipient.

4. Ensemble conforme à la revendication 3, caractérisé en ce que des cloisons partielles ($5_3$) sont prévues entre la trémie et le récipient à hauteur des ouvertures ($3_2$) des cages.

5. Ensemble conforme à la revendication 4, caractérisé en ce que les cloisons ($5_3$) sont distantes de l'extrémité inférieure ($5_2$) de section rétrécie de la trémie.

6. Ensemble conforme à la revendication 1, caractérisé en ce que le bord de l'ouverture du récipient (6) comporte un rebord interne dirigé vers le fond du récipient.

7. Ensemble conforme à l'une quelconque des revendications précédentes, caractérisé en ce que les cages (3) sont mobiles par coulissement sur des profilés (9) disposés transversalement aux rangées (1, 2) de l'ensemble.

8. Ensemble conforme à la revendication 7, caractérisé en ce que les profilés transversaux (9) sont en forme de T et sont disposés à l'envers pour recevoir, en appui sur leurs ailes ($9_1$) deux cages voisines d'une rangée, la branche verticale ($9_2$) de ce T formant un moyen de guidage du coulissement.

## Claims

1. Animal cage assembly comprising groups of four cages, adjacent to each other, in the shape of a parallelepiped, each group of four cages containing a receptacle (6) for food coming from a common pipe positioned at the intersection of these four cages, assembly characterised in that the lower part of the common pipe consists of a hopper (5) whose lower end, having a reduced cross-section, opens into the receptacle (6) to discharge the food coming from the hopper, the horizontal cross-section of this receptacle being identical to the largest horizontal cross-section of the hopper (5), and in that each cage (3) has, in the area of intersection, a lateral edge incorporating a

bevelled cant $(3_1)$ fitting against one of the sides of the hopper, each bevelled cant $(3_1)$ on the cages having a lateral opening $(3_2)$ enabling the animals kept in the four cages to gain access to the food in this receptacle (6).

2. Assembly in accordance with claim 1, characterised in that the cages are in the form of two horizontal rows (1, 2) of adjacent cages (3), subdivided into groups of four cages, each consisting of two adjacent cages from one row and two adjacent cages from the other row, the top of the hopper (5) of each group of four cages opening out level with the top of the rows of cages.

3. Assembly in accordance with any of the preceding claims, characterised in that the hopper is supported by the receptacle through uprights 7 connecting the corners of the hopper to those of the receptacle.

4. Assembly in accordance with claim 3, characterised in that partial baffles $(5_3)$ are provided between the hopper and the receptacle at the height of the openings $(3_2)$ in the cages.

5. Assembly in accordance with claim 4, characterised in that the baffles $(5_3)$ are at some distance from the bottom end $(5_2)$ of the reduced cross-section of the hopper.

6. Assembly in accordance with claim 1, characterised in that the edge of the opening of the receptacle (6) incorporates an internal flange pointing towards the bottom of the receptacle.

7. Assembly in accordance with any of the preceding claims, characterised in that the cages (3) slide on sections (9) arranged at right-angles to the rows (1, 2) of the assembly.

8. Assembly in accordance with claim 7, characterised in that the transverse sections (9) are T-shaped and are arranged upside down in order to accommodate, resting on their shoulders $(9_1)$, two adjacent cages from one row, the vertical leg $(9_2)$ of this T forming a means of guiding the cages as they slide.

**Patentansprüche**

1. Tierkäfiggruppe, aufweisend Gruppen von vier Käfigen, aneinander angrenzend, von parallelflacher Form, wobei jede Gruppe von vier Käfigen ein Behältnis (6) aufweist für Futter, das aus einer gemeinsamen Leitung kommt, angeordnet in der Überschneidungszone der vier Käfige, wobei die Gruppe dadurch gekennzeichnet ist, daß der untere Abschnitt der gemeinsamen Leitung aus einem Trichter (5) besteht, dessen unteres Ende des Verengungsabschnittes in das Behältnis (6) für das Futter, das aus dem Trichter (5) kommt, mündet, wobei der horizontale Abschnitt des Behältnisses übereinstimmend ist mit dem größten horizontalen Abschnitt des Trichters (5), und daß jeder Käfig (3) in der Überschneidungszone eine Seitenkante ausbildet, die durch eine abgestumpfte Winkelfläche $(3_1)$ gebildet ist, angepaßt an eine der Flächen des Trichters, wobei jede abgestumpfte Winkelfläche $(3_1)$ der Käfige eine seitliche Öffnung $(3_2)$ aufweist, die den in den vier Käfigen gehaltenen Tieren einen Zugang zu der in dem Behältnis (6) befindlichen Nahrung ermöglicht.

2. Tierkäfiggruppe nach Anspruch 1, dadurch gekennzeichnet, daß die Käfige in der Form zweier horizontaler Reihen (1, 2) von aneinandergrenzenden Käfigen (3) angeordnet sind, unterteilt in Gruppen von je vier Käfigen, die jeweils sich aus zwei aneinandergrenzenden Käfigen einer Reihe und zwei aneinandergrenzenden Käfigen der anderen Reihe zusammensetzen, wobei der Trichter (5) jeder Gruppe von vier Käfigen mit seinem oberen Ende auf der Höhe der äußeren Fläche der Käfigreihen mündet.

3. Tierkäfiggruppe nach einem der vorstehenden Ansprüche, dadurch gekennzeichnet, daß der Trichter durch das Behältnis mittels Stützen (7) getragen ist, die die Ecken des Trichters mit denen des Behältnisses verbinden.

4. Tierkäfiggruppe nach Anspruch 3, dadurch gekennzeichnet, daß teilweise Trennwände $(5_3)$ vorgesehen sind zwischen dem Trichter und dem Behältnis auf der Höhe der Öffnungen $(3_2)$ der Käfige.

5. Tierkäfiggruppe nach Anspruch (4), dadurch gekennzeichnet, daß die Trennwände $(5_3)$ beabstandet sind von dem unteren Ende $(5_2)$ des verengten Abschnittes des Trichters.

6. Tierkäfiggruppe nach Anspruch 1, dadurch gekennzeichnet, daß der Rand der Öffnung des Behältnisses (6) eine innere Kante aufweist, die zum Boden des Behältnisses hin gerichtet ist.

7. Tierkäfiggruppe nach einem der vorstehenden Ansprüche, dadurch gekennzeichnet, daß die Käfige (3) beweglich sind durch ein Verschieben auf den Profilen (9), die quer zu den Reihen (1, 2) der Anordnung angeordnet sind.

8. Tierkäfiggruppe nach Anspruch (7), dadurch gekennzeichnet, daß die querverlaufenden Profile (9) in T-Form ausgebildet sind und umgekehrt angeordnet sind, um auf ihren Stützen $(9_1)$ zwei benachbarte Käfige einer Reihe aufzunehmen, wobei der vertikale Abschnitt $(9_2)$ des T ein Mittel zur Führung bei der Verschiebung bildet.

# Fig. 1

# Fig. 2

# Fig. 3

5

# Fig. 4

# Fig. 5